# EUROPÄISCHE PATENTANMELDUNG

(11) **EP 1 384 761 A1**
(43) Veröffentlichungstag der Anmeldung: **28.01.2004**
(21) Anmeldenummer: 03016543.5
(22) Anmeldetag: 23.07.2003
(51) Int. Cl.: C09D 11/00

(54) **Wässerige schwarzpigmentierte Ink Jet-Tinte**

(30) Priorität: 23.07.2002 DE 10233409; 31.10.2002 DE 10250925
(71) Anmelder: Pelikan Hardcopy Production AG, 8132 Egg (CH)
(72) Erfinder: Howald, Nicole, 8645 Jona (CH)
(74) Vertreter: Hagemann, Heinrich, Dr.rer.nat., Dipl.-Chem.

(57) **Zusammenfassung**

Beschrieben wird eine wässerige schwarzpigmentierte Ink Jet-Tinte mit einem Gehalt an Tensid, Penetrations- und/oder Verflüchtigungshilfsmittel, einem organischen Lösungsmittel, einem Pigment und gegebenenfalls weiteren üblichen Additiven, dadurch gekennzeichnet, dass die Ink Jet-Tinte enthält: a) etwa 5 bis 50 Gew.-% organisches Lösungsmittel, b) etwa 0,01 bis 2 Gew.-% Tensid, c) etwa 0,5 bis 3 Gew.-% Penetrations- und/oder Verflüchtigungshilfsmittel, d) etwa 1 bis 12 Gew.-% schwarzes Pigment und e) den Rest als Wasser, wobei Diethylenglykolmono-n-butylether, Triethylenglykolmono-n-butylether, Propylenglykolmono-n-butylether, Dipropylenglykolmono-nbutylether ausgenommen sind und bei Gegenwart eines Verflüchtigungshilfsmittels kein Pyrrolidon und/oder Pyrrolidonderivat vorhanden ist. Die erfindungsgemäße Tinte zeichnet sich durch ein deutlich reduziertes Bleedingverhalten bei gleichzeitig guter Farbtiefe und Randschärfe aus.

## Beschreibung

Die Erfindung betrifft eine wässerige schwarzpigmentierte Ink Jet-Tinte mit einem Gehalt an Tensid, Penetrations- und/oder Verflüchtigungshilfsmittel, einem organischen Lösungsmittel, einem Pigment und gegebenenfalls weiteren üblichen Additiven.

Beim Tintenstrahl- oder Ink Jet-Druck erfolgt ein berührungsloses, direktes Drucken, das auf thermischen oder elektrophysikalischen Prinzipien beruht. Die zu druckende Information wird dabei in Form einzelner Tintentropfen auf ein Druckmedium, in der Regel Papier, übertragen. Aufgrund der verschiedenen Möglichkeiten der Tropfenerzeugung unterscheidet man verschiedene Techniken, wie das Continuous Jet-, Drop on Demand- oder Bubble Jet-Verfahren.

Ein wesentlicher Vorteil des Tintenstrahldrucks besteht darin, mehrfarbige Ausdrucke durch Auftrag von drei oder mehr Primärtinten auf einem Substrat in einem einzigen Durchlauf zu erstellen. Dies wird durch Einsatz spezieller Tintenstrahl-Druckköpfe mit einer Mehrzahl einzelner Tintenkompartimente möglich, wobei jedes Kompartiment eine ausgewählte Tinte mit speziellen Farbeigenschaften enthält. Durch Vereinigen dieser Tintenmaterialien auf einem Substrat, z.B. Papier, in variierenden Konfigurationen und Mengen können mehrfarbige Bilder mit hoher Auflösung und Klarheit hergestellt werden. Andere Druckverfahren erfordern im allgemeinen für jede Primärfarbe einen Durchlauf durch den Drucker.

Beim Herstellen mehrfarbiger Bilder durch den Tintenstrahldruck tritt jedoch ein Problem auf, wenn eine Tinte einer Farbe auf oder in unmittelbarer Nähe neben einer Tinte einer anderen Farbe aufgetragen wird. Das Problem äußert sich in einem Vermischen oder Ineinanderlaufen der zwei Tinten an ihrer Grenzfläche, wodurch die Grenzlinie zwischen den Tinten unklar wird, z.B. an den äußeren Kanten verschwimmt. Wenn man daher einen schwarzen Bildbezirk unmittelbar neben einen gelben Bildbezirk druckt, wird eine Diffusion der schwarzen Tinte in die gelbe Tinte beobachtet. Hieraus resultiert eine völlig unzureichende Qualität der Bilder mit schlechter Auflösung. Dieses Phänomen ist Fachleuten auf dem Gebiet der Drucktechnologie auch unter der Bezeichnung "Colourbleeding" oder einfach "Bleeding" bekannt und wird durch Kapillarkräfte hervorgerufen, wodurch die Drucktinten in benachbarte Bereiche gesogen werden.

Zur Verminderung bzw. Verhinderung des Ineinanderlaufens der Tinten an den Berührungslinien sind bereits verschiedene Verfahren vorgeschlagen worden:

Eine Möglichkeit, das Bleeding zu verringern besteht darin, in der Tinte eine große Menge an oberflächenaktivem Mittel, wie einem Tensid, einzusetzen. Jedoch ergibt sich dann neben einem verbesserten Bleedingverhalten ein weiterer Nachteil in einem erhöhten "Feathering", d.h. die Tinten neigen nun noch stärker dazu, den Papierfasern entlangzulaufen. Durch die schnellere Penetration in das Papier wird der an der Papieroberfläche zur Verfügung stehende Anteil des Farbstoffes kleiner. Dies führt zu einer Reduzierung der optischen Dichte und wirkt sich besonders stark bei schwarzer Tinte auf weißem Papier aus. Zusammenhängende Farbflächen erscheinen nicht mehr satt schwarz sondern grau. Es resultiert eine völlig unzureichende Schwärze und zudem eine sehr schlechte Randschärfe des Ausdrucks.

Ein anderer Vorschlag ist in der EP 0 705 889 A1 vorgestellt, der sich gelbildender Tinten bedient. Eine Tinte, vorzugsweise eine schwarze Tinte, enthält ein gelbildendes Reagenz und eine andere Tinte, vorzugsweise eine farbige Tinte, ein gel-initiierendes Reagenz. Beim Zusammentreffen an der Berührungslinie bildet sich zwischen den beiden Tinten eine Gel-Barriere. Das gebildete Gel trocknet allerdings sehr langsam, was zahlreiche Nachteile zur Folge hat.

Nach einer weiteren Modifikation wird an den Berührungsflächen eine schnell penetrierende Tinte unter eine langsam penetrierende Tinte gedruckt. Dadurch penetriert an diesen Stellen auch die langsam penetrierende Tinte schneller in das Papier und das Bleeding wird reduziert. Der Druckvorgang wird hierbei durch eine speziell programmierte Software gesteuert. Vorzugsweise ist die schwarze Tinte die langsam penetrierende Tinte und eine farbige Tinte die schnell penetrierende Tinte. Hierbei wird das Bleeding insgesamt zu wenig vermindert. Außerdem wird ein schwächeres und im Farbton unterschiedliches Schwarz erhalten.

Ferner betrifft die Lehre der EP 0 761 783 A2 eine Tintenzusammensetzung, umfassend ein Pigment, einen Glykolether und Wasser, wobei das Pigment ohne Dispergiermittel in Wasser dispergierbar und/oder löslich ist, und der Glykolether: Diethylenglykolmono-n-butylether, Triethylenglykolmono-n-butylether, Propylenglykolmono-n-butylether, Dipropylenglykolmono-n-butylether oder eine Mischung von zwei oder mehreren dieser Glykolether darstellt. Insbesondere wird davon ausgegangen, dass nur die bezeichneten vier Glykolether zu der erwünschten Reduktion des Bleedings oder Featherings führen, wobei diese Glykolether in einer Menge von 3 bis 30 Gew.-% eingesetzt werden. Jedoch zeigen diese Tintenzusammensetzungen eine unzureichende optische Dichte, eine schwarze Tintenformulierung nach diesem Stand der Technik zeigt einen sehr schlechten schwarzen Farbton.

Der vorliegenden Erfindung lag daher die Aufgabe zugrunde, eine wässerige schwarzpigmentierte Ink Jet-Tinte bereitzustellen, welche die vorstehend geschilderten Nachteile nicht aufweist, bei der insbesondere das Bleeding an den Berührungslinien mit anderen Farben ausreichend reduziert ist, wobei der schwarze Farbton der gedruckten Tinte nicht verändert wird, und gleichzeitig eine gute Farbtiefe und Randschärfe beibehalten bleiben sollen.

Erfindungsgemäß wird diese Aufgabe dadurch gelöst, daß die Ink Jet-Tinte enthält:
a) etwa 5 bis 50 Gew.-% organisches Lösungsmittel,
b) etwa 0,05 bis 2 Gew.-% Tensid,
c) etwa 0,5 bis 3 Gew.-% Penetrations- und/oder Verflüchtigungshilfsmittel,
d) etwa 1 bis 12 Gew.-% schwarzes Pigment und
e) den Rest als Wasser,
wobei Diethylenglykolmono-n-butylether, Triethylenglykolmono-n-butylether, Propylenglykolmono-n-butylether, Dipropylenglykolmono-n-butylether ausgenommen sind und bei Gegenwart eines Verflüchtigungshilfsmittels kein Pyrrolidon und/oder Pyrrolidonderivat vorhanden ist.

Erfindungsgemäß wird das Bleeding daher durch eine günstige Kombination insbesondere von Tensid und Penetrations- und/oder Verflüchtigungshilfsmittel auf ein Mindestmaß reduziert, da die Tinte entsprechend schneller in das Papier eindringen kann. Trotzdem kann mit der erfindungsgemäßen schwarzen Tinte überraschenderweise eine gute Randschärfe und eine sehr gute Farbtiefe erzielt werden.

Als Bestandteil a) werden etwa 5 bis 50 Gew.-% mindestens eines organischen Lösungsmittels eingesetzt. Der Bereich von etwa 10 bis 40 Gew.-% ist bevorzugt, insbesondere der von etwa 15 bis 35 Gew.-%. In der Wahl des organischen Lösungsmittels unterliegt die Erfindung keiner wesentlichen Einschränkung. Sehr vorteilhaft ist der Einsatz von Glycerin, ethoxyliertem Glycerin, Glykol sowie Derivaten und/oder Mischungen hiervon. Einsetzbar sind auch Ethylenglykol, Diethylenglykol, Triethylenglykol, Propylenglykol, aber auch höherwertige Alkohole, beispielsweise vierwertige Alkohole, wie Pentaerythrit, fünfwertige Alkohole (Pentite), wie insbesondere Arabit, A-donit und Xylit, sowie auch sechswertige Alkohole (Hexite), wie Sorbit, Mannit und Dulcit. Bei den letzteren handelt es sich um feste Verbindungen.

Nach einer vorteilhaften Ausführungsform der Erfindung kann das Lösungsmittel, sofern kein Verflüchtigungshilfsmittel vorhanden ist, teilweise ersetzt werden durch Pyrrolidon und/oder ein Pyrrolidonderivat, vorzugsweise 2-Pyrrolidon, N-(2-Hydroxyethyl) -2-pyrrolidon, N-Ethyl-2-pyrrolidon und/oder N-Methyl-2-pyrrolidon. Insbesondere die Verwendung von 2-Pyrrolidon ist in den erfindungsgemäßen Ink Jet-Tinten bevorzugt. Die Pyrrolidone werden im allgemeinen als "Co-Lösungsmittel" bezeichnet und steigern die Druckqualität, insbesondere die Randschärfe und den Farbkontrast. Zudem vermindern sie die Gefahr des Verstopfens der Düsen. Die Erfindung unterliegt bei der Wahl der Pyrrolidonderivate keiner besonderen Beschränkung, wenngleich die vorstehend bezeichneten bevorzugt werden. Die Menge an Pyrrolidon und/oder Pyrrolidonderivaten liegt in der wässerigen Ink Jet-Tinte gemäß der Erfindung zwischen etwa 2 bis 25 Gew.-%. Wird der Wert von 25 Gew.-% überschritten, dann werden die angesprochenen Effekte nicht mehr gesteigert. Eine Menge von etwa 5 bis 20 Gew.-% wird bevorzugt.

Für den Bestandteil b) kommen ein oder mehrere Tenside in einer Menge von etwa 0,01 bis 2,0 Gew.-%, bevorzugt etwa 0,05 bis 1,5 Gew.-%, insbesondere etwa 0,05 bis 1,0 Gew.-%, zum Einsatz. Tenside wirken nach dem "Kopf/Schwanz"-Prinzip. Hierbei lagert sich der Kopf an die jeweilige Oberfläche an, wobei der Schwanz in das Lösungsmittel zeigt. Hierdurch kann die Oberflächenspannung geeignet eingestellt werden. Besonders vorteilhaft sind dabei die im Handel erhältlichen Surfynol 440 (polyethoxyliertes 2,4,7,9-Tetra-methyl-5-decyne-4,7-diol) und Surfynol 104 (2,4,7,9-Tetra-methyl-5-decyne-4,7-diol), beide von der Firma Air Products.

Wichtig ist es für den angestrebten Erfolg, daß die wässerige Ink Jet-Tinte ein Penetrations- und/oder Verflüchtigungshilfsmittel c) enthält. Dieses ist vorzugsweise mit Wasser mischbar. Erfindungsgemäß kann es sich beim Verflüchtigungshilfsmittel beispielsweise um einen ein- oder mehrwertigen Alkohol handeln, insbesondere um niedere Alkohole mit etwa 1 bis 4 Kohlenstoffatomen. Bevorzugt sind Methanol, Ethanol, Propanol, Isopropanol, Butanol, Pentanol und deren Isomeren. Besonders bevorzugt ist Isopropanol. Als Penetrationsmittel finden erfindungsgemäß bevorzugt Glykolether Verwendung, wie Ethylenglykolmonomethylether, Ethylenglykolmonoethylether, Ethylenglykolmonobutylether, Ethylenglykolmono-n-butylether, Ethylenglykolmono-tbutylether, Diethylenglykolmonomethylether, Diethylenglykolmonoethylether, Diethylenglykolmono-t-butylether Diethylenglykolmono-n-propylether, Propylenglykolmonomethylether, Propylenglykolmonoethylether, Propylenglykolmono-t-butylether, Propylenglykolmono-n-propylether, Propylenglykolmonoisopropylether, Dipropylenglykolmono-methylether, Dipropylenglykolmonoethylether, Dipropylenglykolmono-npropylether, Dipropylenglykolmono-isopropylether und dergleichen. Bevorzugt sind Propylglykolether, wie Propylenglykolpropylether. Die hiermit verbundenen Eigenschaften zeigen sich insbesondere darin, daß die Tinte schneller penetriert und/oder trocknet, wodurch das Bleeding reduziert wird.

Das Penetrations- und/oder Verflüchtigungshilfsmittel liegt in der erfindungsgemäßen Ink Jet-Tinte in einer Menge von etwa 0,5 bis 3,0 Gew.-%, insbesondere etwa 0,7 bis 2,9 Gew.-%, vor. Besonders bevorzugt wird der Bereich von etwa 1,0 bis 2,5 Gew.-%. Wird der Wert von etwa 0,5 Gew.-% unterschritten, dann setzt der gewünschte Penetrations- und/oder Verflüchtigungseffekt nicht hinlänglich ein. Ein Überschreiten der Obergrenze von 3,0 Gew.-% führt zu einer unerwünschten Veränderung des schwarzen Farbtons.

Gegen die richtungsweisenden Angaben der EP 0 761 783 A2, wonach der Glykolether in der Ink Jet-Tinte in einer Menge von mindestens 3 Gew.-% enthalten sein soll, verlangt die Erfindung als Maximalwert 3 Gew.-%. Erfindungsgemäß wurde festgestellt, dass bei Vorliegen eines Penetrations- und/oder Verflüchtigungshilfsmittels im Bereich von etwa 0,5 bis 3,0 Gew.-% besonders gute Eigenschaften erzielt werden. Dieses Merkmal löst im funktionellen Zusammenwirken mit den weiteren Merkmalen der erfindungsgemäßen Lehre, insbesondere dem Tensid, die gestellte Aufgabe. Die später folgenden Beispiele belegen das Vorliegen der Eigenschaften in dem wünschenswerten Ausmaß.

Die erfindungsgemäße schwarzpigmentierte Tinte enthält als Farbmittel ein schwarzes Pigment in einer Menge von etwa 1 bis 12 Gew.-%, vorzugsweise von etwa 1,5 bis 6 Gew.-%. Es sind alle gängigen organischen und anorganischen Pigmente geeignet, die im vorliegenden technologischen Bereich bereits genutzt werden. Insbesondere kommen Russ oder anorganische Pigmente, wie Pigment Black 7, in Frage. Besonders bevorzugt sind solche schwarzen Pigmente, die in der obigen EP 0 761 783 B1 angesprochen sind. Diese können verschiedenfarbig sein. Jedoch fallen unter die dortigen Definition auch schwarze Pigmente. Die EP 0 761 783 B1 betrifft u.a. schwarze Pigmente, die durch die darin offenbarte Oberflächenbehandlung auf der Oberfläche eine funktionelle Gruppe in Form einer Carbonyl-, Carboxyl-, Hydroxyl- und/oder Sulfonyl-Gruppe oder eines Salzes davon gebundenen aufweisen. Schwarze Pigmente, die auf ihrer Oberfläche in der angesprochenen Weise modifiziert sind, gehen auch aus der EP 0 797 636 B1 hervor. Ein bevorzugtes Beispiel eines derartigen schwarzen Pigmentes ist das in der nachfolgenden Tabelle 1 bezeichnete Handelsprodukt Cab-O-Jet 300 N.

Die Teilchengröße der erfindungsgemäß eingesetzten Pigmente liegt vorzugsweise unter etwa 0,3 µm, insbesondere unter etwa 0,2 µm. Ganz besonders wird in der Praxis der Bereich von etwa 0,01 bis 0,2 µm, insbesondere von 0,03 bis 0,15 µm, eingestellt.

Da es sich bei dem Gegenstand der Erfindung um eine wässerige Ink Jet-Tinte handelt, macht der Rest zu der Summe der vorstehenden quantitativen Angaben der Bestandteile a) bis d) bis auf 100% Wasser aus.

Selbstverständlich können der erfindungsgemäßen Ink Jet-Tinte bekannte Additive zugesetzt werden, wie Harnstoff, pH-Stellmittel, Biozide und dergleichen.

Zur Einstellung des pH-Wertes können beispielsweise herangezogen werden Triethanolamin, Natronlauge, beliebige Säuren, Puffer, wie Ammoniumacetat und dergleichen. Wenn der pH-Wert eine Rolle spielt, liegt dieser vorzugsweise bei etwa 5 bis 12, insbesondere bei etwa 6 bis 9. Besonders bevorzugt wird in diesen Fällen ein Wert von etwa 6 bis 8 eingestellt, um möglichst keine Korrosion im Drucksystem zu verursachen.

Als besonders vorteilhafte Biozide können angegeben werden: Acticid LA® der Thor Chemie GmbH, DE, welches eine 3:1-Mischung von 5-Chlor-2-methyl-2H-isodiazol-3-on und 2-Methyl-2H-isothiazol-3-on sowie 2-Brom-2-nitropropan-1,3-diol enthält, sowie Preventol® VP OC 3058 TM von Bayer AG, DE, welches 2-Octyl-2H-isothiazol-3-on und Benzylhemiformal/Benzylalkoholmono(poly)hemiformal enthält.

Wenn eine höhere Leitfähigkeit erforderlich ist, können zu deren Einstellung geeignete Additive herangezogen werden, insbesondere bei Tinten für den Continuous Jet-Druck. Dies sind nicht-korrosive, niedrig-toxische, wasserlösliche Salze, insbesondere in einer Menge von etwa 0,01 bis etwa 0,1 Gew.-%. Typische Beispiele hierfür sind niedrige Alkylammoniumchloride.

Die Erfindung soll nachfolgend anhand von drei erfindungsgemäßen Rezepturen sowie einer Vergleichsrezeptur noch näher erläutert werden.

### Beispiele

Die nachfolgenden Beispiele bzw. die darin angegebenen Rezepturen wurden zur Demonstration der vorteilhaften Effekte, die mit der Erfindung verbunden sind, gewählt. Gedruckt wurde auf handelsübliche Kopierpapiere mit einem Canon S600-Drucker.

**Tabelle 1:**

| **Bestandteil** | **Beispiel 1** | **Beispiel 2** | **Beispiel 3** | **Vergleichs-beispiel 1** |
|---|---|---|---|---|
| Wasser entmineralisiert | 51,75 | 53,75 | 48,75 | 47,6 |
| Biozid | 0,10 | 0,10 | 0,10 | 0,1 |
| 2-Pyrrolidon | -- | 10,00 | 10,00 | 14,00 |
| Diethylenglykol | 20,00 | 10,00 | 10,00 | 13,00 |
| Surfynol 104 | 0,15 | 0,15 | 0,15 | 0,10 |
| pH-Stellmittel | | | | 0,20 |
| Isopropanol rein | 3,00 | | | |
| Dowanol PnP | | 1,00 | 1,00 | |
| Cab-O-Jet 300 N | 25,00 | 25,00 | 30,00 | 25,00 |
| **Gesamt** | 100,00 | 100,00 | 100,00 | 100,00 |

**Tabelle 2:**

| **Eigenschaft** | **Beispiel 1** | **Beispiel 2** | **Beispiel 3** | **Vergleichs-beispiel 1** |
|---|---|---|---|---|
| Oberflächenspannung | 35,2 | 36,4 | 36,6 | 41,7 |
| Viskosität | 2,26 | 1,93 | 2,13 | 2,24 |
| Bleeding | 2- | 2+ | 2+ | 3-4 |
| Randschärfe | 1-2 | 1- | 1- | 1 |
| optische Dichte Vollfläche schwarz | 1,85 | 1,8 | 1,95 | 2,05 |
| Surfynol 104.................... 2,4,7,9-Tetra-methyl-5-decyne-4,7-diol, Dowanol PnP.................... Propylenglycol-monopropylether Cab-O-Jet 300 N............... 15%ige wässerige Russpigmentpräparation | | | | |

Es zeigt sich, daß mit den erfindungsgemäßen Rezepturen aufgrund der Kombination Tensid/Penetrations- und/oder Verflüchtigungshilfsmittel sehr gute Ergebnisse erzielt werden, insbesondere eine deutliche Reduzierung des Bleedingverhaltens. Dennoch werden ausgezeichnete Randschärfen und hohe optische Dichten beobachtet. Bei den Vergleichsrezepturen sind zwar die optische Dichte und die Randschärfe sehr gut, jedoch ist das Bleedingverhalten außerordentlich schlecht, so dass ein Ineinanderlaufen in andere Farben zu beobachten ist.

Die Tabellenwerte zur Oberflächenspannung, Viskosität, Bleeding, Randschärfe und die optische Dichte wurden wie folgt bestimmt:
1. Die Oberflächenspannung wurde nach der Ringmethode nach du Noüy bestimmt. Die Einheit ist mN/m. Hierbei wird ein Digital-Tensiometer K10T der Firma Krüss, DE, herangezogen.
2. Die kinematische Viskosität wurde mit einem Kapillarviskosimeter bei 25°C bestimmt. Die Einheit ist mm²/s (cSt).
3. Das Bleeding wurde bewertet mit 1 = sehr gut, 2 = gut, 3 = befriedigend, 4 = ausreichen und 5 = mangelhaft.
4. Eine Ink Jet-Tinte wird hinsichtlich der Randschärfe mit "1 = sehr gut" bezeichnet, wenn die Buchstabenränder klar erkennbar sind und kein Feathering auftritt, d.h., die Ink Jet-Tinte nicht an den Papierfasern entlangläuft und damit die Buchstabenränder verzerrt. Die Beurteilung ist visuell. Der Grad des Featherings wird wieder durch Vergleich festgelegt.
5. Die optische Dichte wurde mit einem Macbeth Densitometer TD 932 gemessen. Je höher der Wert für die optische Dichte liegt, um so tiefer ist der schwarze Farbton.

## Patentansprüche

1. Wässerige schwarzpigmentierte Ink Jet-Tinte mit einem Gehalt an Tensid, Penetrations- und/oder Verflüchtigungshilfsmittel, einem organischen Lösungsmittel, einem Pigment und gegebenenfalls weiteren üblichen Additiven, **dadurch gekennzeichnet, dass** die Ink Jet-Tinte enthält
a) etwa 5 bis 50 Gew.-% organisches Lösungsmittel,
b) etwa 0,01 bis 2 Gew.-% Tensid,
c) etwa 0,5 bis 3 Gew.-% Penetrations- und/oder Verflüchtigungshilfsmittel,
d) etwa 1 bis 12 Gew.-% schwarzes Pigment und
e) den Rest als Wasser,
wobei Diethylenglykolmono-n-butylether, Triethylenglykolmono-n-butylether, Propylenglykolmono-n-butylether, Dipropylenglykolmono-n-butylether ausgenommen sind und bei Gegenwart eines Verflüchtigungshilfsmittels kein Pyrrolidon und/oder Pyrrolidonderivat vorhanden ist.

2. Ink Jet-Tinte nach Anspruch 1, **dadurch gekennzeichnet, dass** sie etwa 10 bis 40 Gew.-%, insbesondere etwa 15 bis 35 Gew.-%, organisches Lösungsmittel enthält.

3. Ink Jet-Tinte nach Anspruch 1 oder 2, **dadurch gekennzeichnet, dass** das organische Lösungsmittel Glycerin, Glykole, ethoxyliertes Glycerin, Derivate und/oder Mischungen hiervon enthält.

4. Ink Jet-Tinte nach einem der Ansprüche 1 bis 3, **dadurch gekennzeichnet, dass** sie etwa 0,05 bis 1,5 Gew.-%, insbesondere etwa 0,05 bis 1,0 Gew.-%, Tensid enthält.

5. Ink Jet-Tinte nach mindestens einem der vorhergehenden Ansprüche, **dadurch gekennzeichnet, dass** das Verflüchtigungshilfsmittel einen ein- oder mehrwertigen Alkohol darstellt.

6. Ink Jet-Tinte nach Anspruch 5, **dadurch gekennzeichnet, dass** das Verflüchtigungshilfsmittel in Form eines Alkohols mit 1 bis 4 Kohlenstoffatomen, insbesondere Isopropanol, vorliegt.

7. Ink Jet-Tinte nach mindestens einem der vorhergehenden Ansprüche 1 bis 4, **dadurch gekennzeichnet, dass** das Penetrationshilfsmittel Glykolether, insbesondere einen Propylglykolether darstellt.

8. Ink Jet-Tinte nach einem der Ansprüche 5 bis 7, **dadurch gekennzeichnet, dass** das Penetrations- und/oder Verflüchtigungshilfsmittel in einer Menge von etwa 0,7 bis 2,9 Gew.-%, insbesondere etwa 1,0 bis 2,5 Gew.-% vorliegt.

9. Ink Jet-Tinte nach mindestens einem der vorhergehenden Ansprüche 1 bis 3, **dadurch gekennzeichnet, dass** das organische Lösungsmittel teilweise ersetzt ist durch etwa 2 bis 25 Gew.-%, insbesondere etwa 5 bis 20 Gew.-%, Pyrrolidon und/oder ein Pyrrolidonderivat.

10. Ink Jet-Tinte nach Anspruch 1, **dadurch gekennzeichnet, dass** sie etwa 1,5 bis 6 Gew.-% Pigment enthält.

11. Ink Jet-Tinte nach Anspruch 1 oder 10, **dadurch gekennzeichnet, dass** das schwarze Pigment in Form eines organischen oder anorganischen Pigments vorliegt.

12. Ink Jet-Tinte nach mindestens einem der vorhergehenden Ansprüche, **dadurch gekennzeichnet, dass** weitere Additive in Form von Harnstoff, einem pH-Stellmittel und/oder einem Biozid vorliegen.
